Europäisches Patentamt

European Patent Office

Office européen des brevets

(19)

(11) **EP 0 750 177 B1**

(12) **FASCICULE DE BREVET EUROPEEN**

(45) Date de publication et mention
de la délivrance du brevet:
**29.01.2003 Bulletin 2003/05**

(51) Int Cl.⁷: **G01C 19/56**

(21) Numéro de dépôt: **96109547.8**

(22) Date de dépôt: **14.06.1996**

(54) **Dispositif et procédé de mesure de vitesse angulaire**

Vorrichtung und Verfahren zum Messen der Winkelgeschwindigkeit

Apparatus and method for measuring angular speed

(84) Etats contractants désignés:
**CH DE ES GB IT LI NL SE**

(30) Priorité: **21.06.1995 FR 9507417**

(43) Date de publication de la demande:
**27.12.1996 Bulletin 1996/52**

(73) Titulaire: **ASULAB S.A.**
**2074 Marin (CH)**

(72) Inventeurs:
• **Farine, Pierre-André**
**2003 Neuchâtel (CH)**

• **Etienne, Jean-Daniel**
**2206 Les Geneveys-sur-Coffrane (CH)**
• **Dalla Piazza, Silvio**
**2610 Saint-Imier (CH)**

(74) Mandataire: **Patry, Didier Marcel Pierre et al**
**I C B,**
**Ingénieurs Conseils en Brevets S.A.**
**Rue des Sors 7**
**2074 Marin (CH)**

(56) Documents cités:
**EP-A- 0 494 588     EP-A- 0 503 807**
**US-A- 4 930 351**

# Description

La présente invention concerne un dispositif de mesure d'une vitesse angulaire comportant :

- un transducteur destiné à tourner à ladite vitesse angulaire;
- des moyens pour générer une vibration mécanique dudit transducteur en réponse à un signal d'excitation, cette vibration mécanique comportant une composante parasite, et au moins une composante utile ayant une amplitude représentative de ladite vitesse angulaire;
- des moyens pour produire un signal électrique de détection représentatif de ladite vibration mécanique et comportant également une composante parasite et au moins une composante utile ayant une amplitude représentative de ladite vitesse angulaire.

L'invention concerne également un procédé de traitement des signaux d'excitation et de détection pour faciliter la mesure de la composante utile du signal de détection, en augmentant la résolution de la mesure, et en la rendant indépendante des variations de température de fonctionnement.

L'invention s'applique notamment à la détermination de la composante utile du signal de détection électrique fourni par un gyromètre à diapason en réponse à un signal d'excitation, du fait de la force de Coriolis agissant sur le diapason.

Les gyromètres à diapason ont tendance à s'imposer pour la détermination de la vitesse angulaire d'un objet en mouvement, du fait de leur petite taille et de leur faible coût. Des gyroscopes complexes et onéreux sont depuis longtemps utilisés, notamment dans les avions ou les missiles, où ils servent à suivre l'orientation de l'avion ou du missile par rapport à un référentiel fixe.

Mais, avec les possibilités de miniaturisation liées au gyroscope à diapason, de nouvelles applications sont envisagées, notamment dans le domaine automobile,- où ils peuvent être intégrés dans des dispositifs d'antidérapage ou de correction d'assiette.

Un dispositif de mesure d'une vitesse angulaire à l'aide d'un diapason en quartz a été décrit dans le brevet EP-B-0 515 981, du même demandeur. Dans un gyromètre à diapason en quartz, les branches du diapason sont pourvues d'électrodes pour l'application d'un signal d'excitation, et d'électrodes pour la détection d'un signal de détection qui correspond à la réponse du diapason lors de sa mise en rotation autour de son axe longitudinal.

Un autre dispositif permettant de mesurer une vitesse angulaire est décrit dans le document US-A-4 930 351, mais ce dispositif qui comprend un résonateur à quartz en forme de double diapason et un circuit électronique associé est spécialement conçu pour permettre de mesurer en même temps qu'une vitesse angulaire une accélération linéaire à laquelle est également soumis le résonateur.

Cela dit, certains documents de l'état de la technique, notamment le EP 0 494 588, font état du fait que le bon fonctionnement d'un gyromètre à diapason dépend d'une part de l'implantation des électrodes d'excitation et de détection sur le diapason, permettant de minimiser le couplage entre le signal d'excitation et le signal de détection, et d'autre part, de la qualité des moyens de traitement électronique associés au diapason pour pleinement exploiter la composante utile, typiquement très faible, due à la force de Coriolis lors du mouvement du gyromètre.

Or, les gyromètres à diapason connus sont dans l'état actuel de la technique pénalisés par la difficulté de mesurer la partie utile du signal détecté correspondant à la force de Coriolis, et ce d'autant plus que la vitesse de rotation du gyromètre est faible. En outre, certains composants ou dispositifs analogiques utilisés dans les montages de mesure de la composante utile du signal de détection, introduisent dans cette composante un facteur dépendant de l'effet de la température. De ce fait, ils rendent la composante utile du signal de détection dépendante de la température, alors que pour une mesure optimale, la composante utile ne devrait dépendre que de la vitesse angulaire.

La présente invention a pour but de remédier à ces inconvénients, en proposant un dispositif de mesure d'une vitesse angulaire basé sur l'utilisation de la force de Coriolis, permettant d'isoler et de déterminer avec une résolution suffisante la composante utile du signal de détection fourni par le transducteur.

Un autre but de l'invention est de proposer un dispositif de mesure du type précité, permettant de délivrer un signal de mesure du signal utile détecté qui soit indépendant de la température de fonctionnement.

A cet effet, l'invention a pour objet un dispositif de mesure d'une vitesse angulaire comportant :

- un transducteur destiné à tourner à ladite vitesse angulaire;
- des moyens pour générer une vibration mécanique dudit transducteur en réponse à un signal d'excitation, cette vibration mécanique comportant une composante parasite, et au moins une composante utile ayant une amplitude représentative de ladite vitesse angulaire;
- des moyens pour produire un signal électrique de détection représentatif de ladite vibration mécanique et comportant également une composante parasite et au moins une composante utile ayant une amplitude représentative de ladite vitesse angulaire;

caractérisé en ce qu'il comporte des moyens de traitement analogique des signaux de détection et d'excitation comprenant deux multiplieurs analogiques identiques ayant un même comportement de température, et un circuit déphaseur d'exactement 90° connectés entre eux pour fournir au moins un signal de mesure analogique dépendant de ladite composante utile du signal électrique de détection, et indépendant de la température qui présente par rapport audit signal d'excitation et/ou de détection un déphasage représentatif de la vitesse angulaire dudit transducteur.

Selon d'autres caractéristiques de l'invention, le circuit déphaseur à 90° est apte à produire à partir d'un signal d'entrée, deux signaux de sortie exactement en quadrature, quelle que soit la température de fonctionnement dudit circuit déphaseur et ce circuit déphaseur à 90° est connecté en entrée au signal d'excitation du transducteur et comporte une première sortie connectée à une entrée de l'un desdits multiplieurs analogiques pour lui fournir l'un desdits signaux de sortie et une seconde sortie connectée à une entrée de l'autre multiplieur analogique pour lui fournir l'autre desdits signaux de sortie, lesdits multiplieurs étant en plus alimentés par ledit signal de détection pour produire chacun un signal de mesure analogique dépendant de ladite composante utile du signal de détection et indépendant de la température.

Avantageusement, le circuit déphaseur à 90° comporte deux circuits diviseurs de fréquence connectés en parallèle et ayant un même comportement en température, mais dont l'un réagit à un front montant et dont l'autre réagit à un front descendant, les deux diviseurs de fréquence étant alimentés par un même signal dérivé du signal d'excitation.

L'invention concerne également un procédé de mesure de vitesse angulaire associé au dispositif mentionné ci-dessus, tel que défini dans les revendications.

Les objets et caractéristiques de l'invention vont être décrits plus en détail et à titre d'exemple non limitatif en liaison avec les dessins, dans lesquels :

- la figure 1A est une vue en coupe longitudinale d'un diapason tel que ceux utilisés dans certains gyromètres;
- la figure 1B est une vue en coupe transversale I-I des branches d'excitation (E) et de détection (D) du diapason de la figure 1A;
- la figure 2 est une vue schématique du dispositif de mesure d'une vitesse angulaire selon l'invention;
- la figure 3 est un schéma de principe d'un circuit de traitement analogique permettant de rendre le signal de mesure indépendant de la température;
- la figure 4 est un schéma de principe d'un exemple de réalisation du circuit déphaseur à 90° de la figure 3;
- la figure 5 est un diagramme des temps représentant les signaux utilisés dans le circuit de la figure 4;

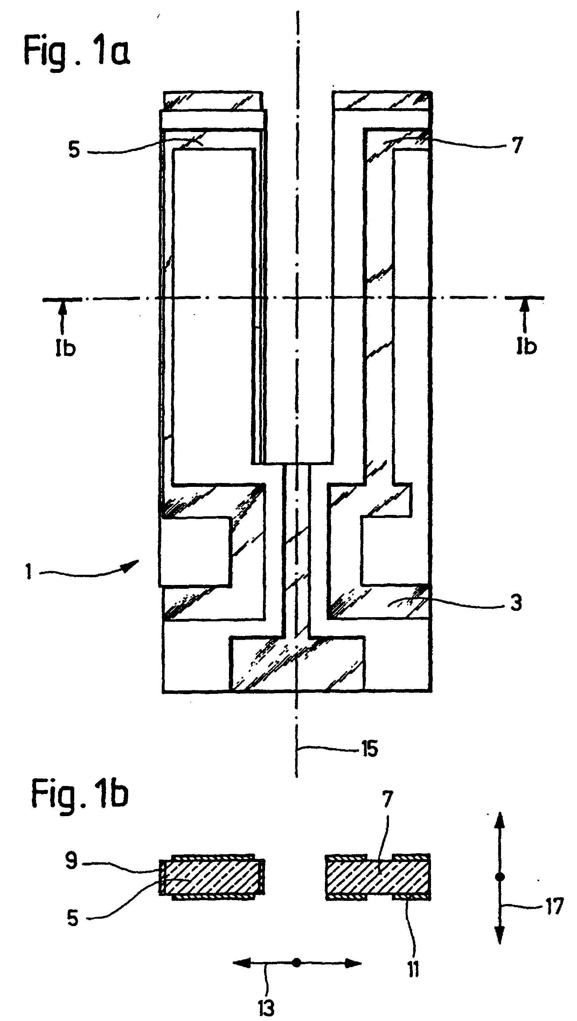

On se réfère à la figure 1. On a représenté dans cette figure un exemple de diapason 1 du type de ceux utilisables dans un gyromètre. Le diapason 1 représenté en coupe longitudinale dans la figure 1A comporte principalement une base 3 solidaire de deux branches 5, 7, l'ensemble étant réalisé en un matériau de quartz piézo-électrique. Comme représenté en coupe transversale selon la figure 1B, chaque branche 5, 7 comporte des électrodes 9, 11. La branche d'excitation (E) 5 comporte des électrodes d'excitation 9, une seule des quatre électrodes représentées étant référencée, permettant l'application d'un signal électrique $\pm$ V qui permet d'exciter et par conséquent de faire vibrer mécaniquement les branches 5, 7 du diapason 1 dans un premier plan, comme indiqué par les flèches 13. La branche de détection (D) 7 comporte des électrodes de détection 11, une seule des quatre électrodes représentées étant référencée, qui permettent de transformer les vibrations mécaniques de la branche de détection en un signal électrique détecté.

Selon la théorie des gyromètres à diapason, un mouvement en rotation angulaire du diapason 1 autour de son axe longitudinal 15 pendant qu'un signal d'excitation est appliqué sur l'électrode d'excitation (E) 9, génère une force de Coriolis perpendiculaire à l'excitation, et par conséquent une vibration d'au moins la branche de détection (D) 7 dans un plan perpendiculaire au plan correspondant à la vibration d'excitation, comme indiqué par la flèche 17.

Cette vibration mécanique est transformée par le quartz piézo-électrique du diapason 1 en un signal électrique qui est détecté par les électrodes de détection 7 du diapason 1.

Pour simplifier les considérations qui vont suivre, on admettra que le signal d'excitation (OSC) est sinusoïdal, et que le signal de détection (DET) correspond à la superposition d'une composante parasite et d'une composante utile correspondant à la force de Coriolis, déphasées d'un angle $\varphi_0$ par rapport au signal d'excitation. Dans ces conditions, les signaux OSC et DET satisfont aux équations suivantes :

$$(1) \qquad OSC = A.\cos(\omega_0 t + \varphi_0),$$

où A est l'amplitude du signal d'excitation, $\omega_0$ sa pulsation et $\varphi_0$ son déphasage initial par rapport au signal de détection, et :

$$(2) \qquad DET = B.\cos(\omega_0 t) + C.\sin(\omega_0 t),$$

dans laquelle le premier terme représente un signal parasite issu du couplage capacitif et mécanique entre les branches du diapason, et le second terme représente le signal utile dû à la force de Coriolis, dont l'amplitude C que l'on cherche à mesurer est proportionnelle à la vitesse de rotation $\Omega$ du diapason.

On note par ailleurs que le déphasage $\varphi_0$ entre le signal d'excitation OSC et le signal de détection DET, constant pour un diapason donné, est typiquement de l'ordre de 56° pour un diapason tel que celui représenté en figure 1.

Le signal de détection DET apparaît comme un signal modulé en phase, pouvant être réécrit selon l'équation

$$(3) \qquad DET = \sqrt{(B^2 + C^2)} . \sin(\varphi(t)),$$

avec $\varphi(t) = \omega_0 t + \psi$, et où $\psi = \text{arc tan } C/B$.

En pratique, on s'est aperçu que l'amplitude C de la composante utile du signal de détection est très inférieure, pour des vitesses de rotation $\Omega$ de l'ordre de 50°/s, à l'amplitude B de la composante de couplage parasite, de sorte que le rapport C/B est typiquement de l'ordre de 1/50, ce qui correspond à un angle de déphasage $\psi$ très faible, de l'ordre de 1°, difficile à mesurer et à utiliser pour déterminer la vitesse de rotation Q du diapason 1, surtout au cas où il doit être tenu compte d'un effet de température sur certains composants intervenant dans l'amplification ou le traitement du signal de détection.

La présente invention s'intéresse au procédé de traitement électronique des signaux électriques d'excitation et de détection, et aux moyens qui y sont associés, pour isoler et mesurer sans effet de température, la composante utile du signal de détection, c'est-à-dire la composante due à la force de Coriolis, mise en évidence ci-dessus.

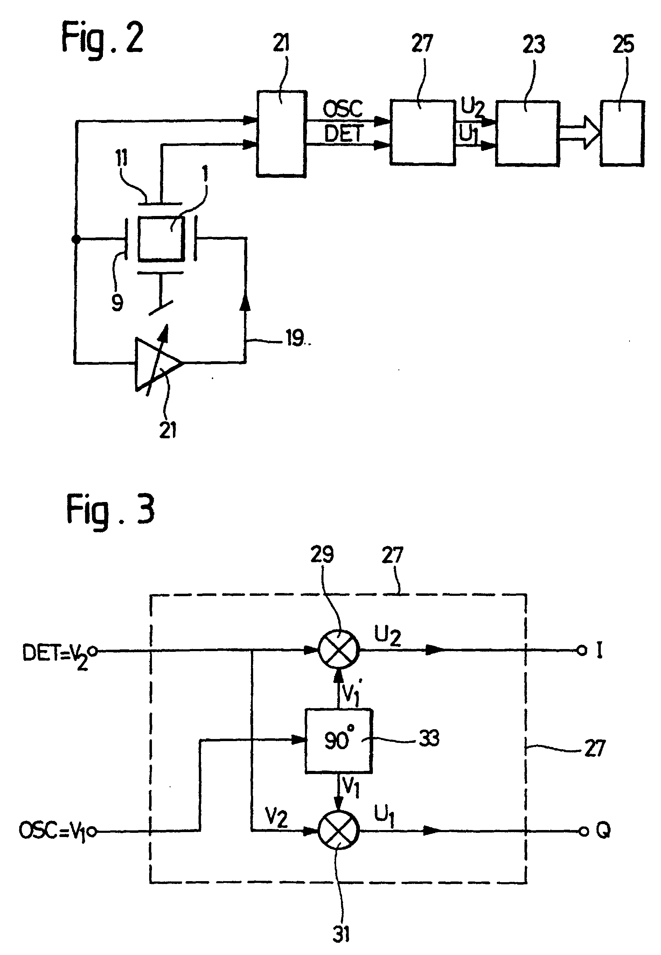

A cet effet, on se réfère à la figure 2, où est représenté de façon schématique un diapason 1 conforme à celui de la figure 1, associé à des circuits électroniques de traitement du signal d'excitation et du signal de détection.

De façon connue en soi, les électrodes d'excitation 9 du diapason 1 sont intégrées à un circuit résonateur schématisé par la boucle 19 et alimenté en courant constant par un amplificateur 21, et le signal de détection DET est prélevé aux bornes des électrodes de détection 11 du diapason 1.

Un procédé connu pour mesurer le déphasage $\psi$ consiste à effectuer une démodulation dite en phase et en quadrature, ou I-Q, des signaux d'excitation et de détection. Selon ce procédé, le signal d'excitation OSC et le signal de détection DET sont d'abord amplifiés et mis en quadrature. Pour cela, on leur fait subir un déphasage de $(\pi/2 - \varphi_0)$ à l'aide de filtres passe-tout, sur lesquels l'influence de la température s'exerce de façon différente. L'étage d'amplification et de déphasage utilisé à cet effet et connu en soi est représenté de façon schématique par le bloc 21 de la figure 2. Du fait de l'effet des variations de température sur l'étage analogique 21, il est nécessaire de prévoir des moyens pour éliminer ou tout au moins compenser cet effet de la température, afin de produire un signal de mesure de la vitesse angulaire du diapason qui ne soit pas noyé dans des fluctuations dues à des écarts de température.

A cet effet, les signaux OSC et DET sont amenés à un circuit de traitement analogique 27 selon l'invention, qui sera détaillé plus loin. Les signaux $U_1$, $U_2$ en sortie du circuit de traitement 27 sont indépendants de la température, et sont transmis de façon connue à un circuit de conversion analogique/numérique 23. Ce dernier génère par échantillonnage des signaux $U_1$, $U_2$, des échantillons numériques indépendants de la température, mais représentatifs de la composante utile du signal de détection. Ces échantillons sont transmis à un microprocesseur 25 qui en déduit la vitesse angulaire du diapason.

On se réfère à la figure 3, où la structure du circuit 27 de traitement analogique est représentée plus en détail. Ce circuit comporte deux mélangeurs identiques 29, 31, et un circuit déphaseur 33 apte à produire à partir d'un signal d'entrée $V_1$ choisi comme étant le signal d'excitation OSC, deux signaux de sortie $V_1$, $V'_1$ déphasés d'un déphasage fixe d'exactement 90°. Selon l'invention, le signal de détection DET = $V_2$ est utilisé pour attaquer en parallèle une entrée de chacun des deux mélangeurs 29, 31, alors que l'autre entrée des déphaseurs 29, 31 est respectivement attaquée par les signaux en quadrature $V'_1$ et $V_1$.

A la sortie du mélangeur 29, on obtient le signal $U_2(t) = V_1'.V_2 = OSC'.DET$, et à la sortie du mélangeur 31, on obtient le signal $U_1(t) = V_1.V_2 = OSC.DET$.

Avec la définition du signal OSC selon l'équation (1) précédente, et à condition que le signal OSC' = V1' soit exactement déphasé de 90° par rapport au signal OSC, on obtient pour le signal OSC' l'expression suivante :

$$(4) \qquad OSC' = A.\cos(\omega_0 t + \varphi_0),$$

et donc, pour les signaux $U_1$ et $U_2$ à la sortie du circuit de traitement analogique 27, et après le passage des filtres passes-bas habituels à l'entrée d'un convertisseur analogique/numérique, les expressions suivantes :

$$(5) \qquad U1(t) = V1.V2 = AB/2.\cos\varphi - AC/2.\sin\varphi$$

$$(6) \qquad U2(t) = V'1.V2 = AB/2.\sin\varphi + AC/2.\cos\varphi$$

$U_1(t)$ et $U_2(t)$ sont donc de la forme : $A/2.\sqrt{(B^2 + C^2)}$ . $\cos(\varphi + \psi)$ et $A/2. \sqrt{(B^2 + C^2)} .\sin(\varphi + \psi)$ respectivement où $\psi$ représente le déphasage dû à la force de Coriolis, et qui a comme expression: $\psi = \text{arc tan } C/B$. Ce déphasage est alors déterminé à partir de la valeur instantanée de $U_1(t)$ et $U_2(t)$ par le convertisseur analogique/numérique 23 suivi du microprocesseur 25, comme indiqué précédemment. Il est important de noter que grâce au traitement analogique effectué par le circuit de traitement 27, $U_1(t)$ et $U_2(t)$ ne dépendent que, d'une part, du déphasage initial $\varphi$ entre le signal d'excitation OSC et de détection DET, qui est fixe pour un diapason donné, et d'autre part, du déphasage $\psi$ variable en fonction de la vitesse de rotation du diapason, et que l'on cherche à déterminer. Mais, en ce qui concerne la partie électronique du système, ni $U_1(t)$ ni $U_2(t)$ ne dépendent plus de l'effet de la température, au moins l'un par rapport à l'autre, de sorte que la mesure de la vitesse de rotation du diapason peut être effectuée avec une meilleure précision.

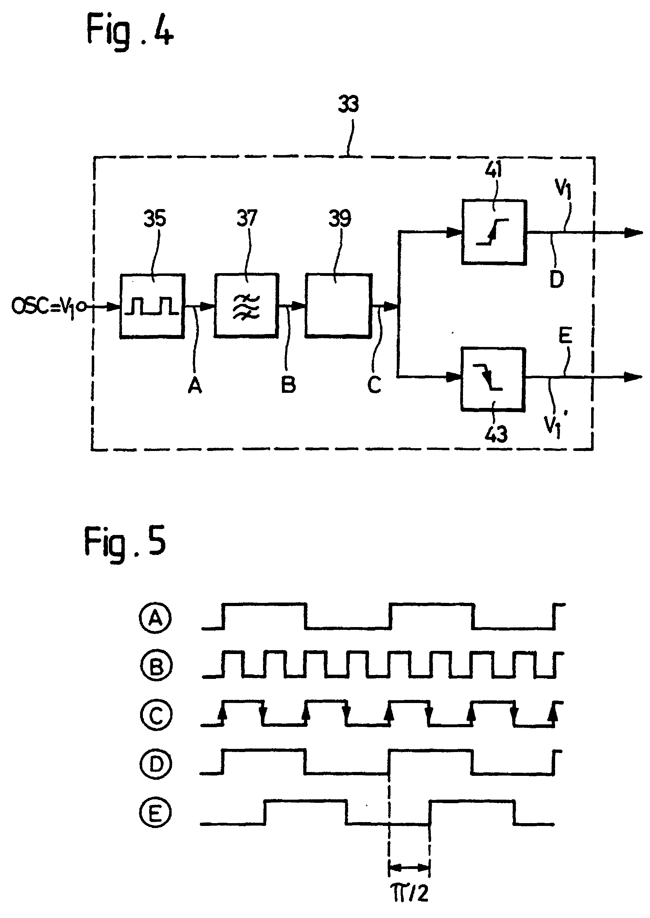

On a représenté en figure 4 un exemple de réalisation plus détaillée du circuit déphaseur fixe 33 représenté de façon schématique dans la figure 3. Selon cette réalisation, le circuit déphaseur 33 comporte un monostable 35, que l'on alimente avec le signal d'excitation OSC sinusoïdal. Le monostable 35 est choisi pour générer un signal rectangulaire de durée de cycle relativement courte, de l'ordre de 10 à 20%, de sorte que son signal de sortie A comporte plusieurs harmoniques. Ainsi, en supposant que le signal d'excitation OSC présente une fréquence de 8 kHz, le monostable 35 produit un signal rectangulaire A (voir figure 5A) de même fréquence, et un certain nombre d'harmoniques à des fréquences multiples de 8 kHz.

Le monostable 35 est alors suivi d'un filtre passe-bande, réglé par exemple sur la troisième harmonique produite par le monostable 35, c'est-à-dire à une fréquence de 32 kHz dans cet exemple. Le filtre passe-bande 37 produit un signal rectangulaire B (figure 5B) à 32 kHz, qui attaque un diviseur de fréquence par deux 39. Celui-ci produit un signal rectangulaire C (figure 5C) à une fréquence de 16 kHz.

La sortie du diviseur de fréquence 39 est connectée en parallèle à l'entrée de deux autres diviseurs de fréquence identiques 41, 43, mais dont le premier est commandé par un front montant du signal C, le second étant commandé par un front descendant du signal C. De la sorte, on obtient en sortie des diviseurs de fréquence (41, 43) les signaux D, E respectifs (figure 5D et 5E). Ces signaux D, E correspondent au signal d'excitation OSC et au signal OSC' exactement déphasé de 90° par rapport à OSC, quelle que soit la température de fonctionnement.

L'utilisation des signaux OSC et OSC' déphasé de 90° pour attaquer les mélangeurs respectifs (31, 29) tel qu'expliqué en relation à la figure 3, permet d'obtenir les signaux de sortie U1, U2 indépendants de la température. En effet, les mélangeurs (29, 31) étant identiques, ils subissent la même influence de la température. En conséquence, les signaux U1 et U2 restent déphasés de (90° + $\psi$), ce qui permet de démoduler $\psi$ à l'aide du convertisseur analogique/numérique 23 suivi du microprocesseur 25.

A cet égard, on peut noter que dans le cas où le déphasage initial $\varphi$ est égal à 56° et où la résolution souhaitée est de 0.005°, la sortie du convertisseur analogique numérique 23 doit définir environ 11200 valeurs numériques (56°/0,005). Pour obtenir une telle résolution, le convertisseur doit donc effectuer un codage sur 14 bits ($2^{14}$ = 16384).

De ce qui précède, il ressort que le dispositif de mesure de vitesse angulaire selon l'invention répond aux objectifs fixés, en permettant de délivrer avec une résolution élevée, un signal de sortie qui ne dépend plus que de la composante utile du signal de détection, tout en éliminant l'influence de la température sur le dispositif.

## Revendications

1. Dispositif de mesure d'une vitesse angulaire comportant :

   - un transducteur (1) destiné à tourner à ladite vitesse angulaire;
   - des moyens (9) pour générer une vibration mécanique dudit transducteur (1) en réponse à un signal d'excitation (OSC), cette vibration mécanique comportant une composante parasite et au moins une composante utile ayant une amplitude représentative de ladite vitesse angulaire;
   - des moyens pour produire un signal électrique de détection (DET) représentatif de ladite vibration mécanique et comportant également une composante parasite et au moins une composante utile ayant une amplitude représentative de ladite vitesse angulaire;

   **caractérisé en ce qu'**il comporte des moyens de traitement analogique (27) des signaux de détection (DET) et d'excitation (OSC) comprenant deux multiplieurs analogiques identiques (29, 31) ayant un même comportement en température et un circuit déphaseur (33) d'exactement 90°, connectés entre eux pour fournir au moins un signal de mesure analogique ($U_1$, $U_2$) dépendant de ladite composante utile du signal de détection (DET) et indépendant de la température qui présente par rapport audit signal d'excitation (OSC) et/ou de détection (DET) un déphasage ($\Psi$) représentatif de la vitesse angulaire dudit transducteur (1).

2. Dispositif selon la revendication 1, **caractérisé en ce que** ledit transducteur (1) est un diapason à quartz.

3. Dispositif selon la revendication 1 ou 2, **caractérisé en ce que** ledit circuit déphaseur à 90° (33) est apte à produire à partir d'un signal d'entrée ($V_1$), deux signaux de sortie ($V_1$, $V_1'$) exactement en quadrature, quelle que soit la température de fonctionnement dudit circuit déphaseur (33).

4. Dispositif selon la revendication 3, **caractérisé en ce que** ledit circuit déphaseur à 90° (33) est connecté en entrée au signal d'excitation (OSC) du transducteur et comporte une première, sortie connectée à une entrée de l'un desdits multiplieurs analogiques (31) pour lui fournir l'un ($V_1$) desdits signaux de sortie et une seconde sortie connectée à une entrée de l'autre multiplieur analogique (29) pour lui fournir l'autre ($V'_1$) desdits signaux de sortie, lesdits multiplieurs (31, 29) étant en plus alimentés par ledit signal de détection (DET), pour produire chacun un signal de mesure analogiques ($U_1$, $U_2$) dépendant de ladite composante utile de ce signal de détection et indépendant de la température.

5.  Dispositif selon la revendication 4, **caractérisé en ce que** ledit circuit déphaseur à 90° (33) comporte deux circuits diviseurs de fréquence (41, 43) connectés en parallèle et ayant un même comportement en température, mais dont l'un (41) réagit à un front montant et dont l'autre (43) réagit à un front descendant, lesdits deux diviseurs (41, 43) étant alimentés par un même signal C dérivé du signal d'excitation (OSC).

6.  Dispositif selon la revendication 5, **caractérisé en ce que** ledit circuit déphaseur à 90° (33) comporte un monostable (35) alimenté par le signal d'excitation (OSC) et délivrant un signal rectangulaire (A), la sortie dudit monostable (35) étant connectée à l'entrée d'un filtre passe-bande (37) apte à laisser passer la troisième harmonique (B) dudit signal rectangulaire (A), la sortie dudit filtre passe-bande (37) étant connectée à l'entrée d'un diviseur par deux (39) dont la sortie est connectée auxdits diviseurs identiques (41, 43) connectés en parallèle, de sorte que lesdits diviseurs identiques délivrent en sortie des signaux (D, E) de même fréquence que le signal d'excitation, et en quadrature l'un par rapport à l'autre.

7.  Dispositif selon la revendication 6, **caractérisé en ce que** ledit monostable (35) est choisi pour délivrer en sortie un signal rectangulaire (A) ayant un temps de cycle de l'ordre de 10 à 20%.

8.  Dispositif selon l'une quelconque des revendications précédentes, **caractérisé en ce que** les sorties ($U_1$, $U_2$) dudit circuit de traitement analogique (27) sont connectées à l'entrée d'un convertisseur analogique/numérique (23), notamment un convertisseur analogique/numérique à 14 bits, dont la sortie est connectée à l'entrée de données d'un microprocesseur (25) où les valeurs numériques de vitesse angulaire du transducteur sont calculées.

9.  Procédé pour mesurer la vitesse angulaire d'un transducteur (1) soumis à une force de Coriolis du fait de son mouvement angulaire, comportant les étapes consistant à :

-   appliquer un signal électrique d'excitation (OSC) au transducteur (1), apte à générer en réponse un signal de détection (DET) comportant une composante utile représentative de la vitesse angulaire du transducteur (1), et une composante parasite;
-   détecter ledit signal de détection;

**caractérisé en ce qu'**il comporte en outre les étapes consistant à :

-   soumettre ledit signal de détection (DET) à un traitement analogique pour obtenir au moins un signal de mesure analogique ($U_1$, $U_2$) dépendant de ladite composante utile de ce signal de détection et indépendant de la température, qui présente par rapport à ce signal de détection un déphasage ($\Psi$) représentatif de la vitesse angulaire du transducteur (1); et
-   effectuer sur ledit signal analogique de mesure ($U_1$, $U_2$) une transformation analogique/numérique, suivie du calcul pour obtenir la valeur de ladite vitesse de rotation du transducteur (1).

**Patentansprüche**

1.  Vorrichtung zum Messen einer Winkelgeschwindigkeit, die umfaßt:

-   einen Meßwandler (1), der dazu bestimmt ist, sich mit dieser Winkelgeschwindigkeit zu drehen;
-   Mittel (9) zum Erzeugen einer mechanischen Schwingung des Meßwandlers (1) in Reaktion auf ein Erregungssignal (OSC), wobei diese mechanische Schwingung eine parasitäre Komponente und wenigstens eine Nutzkomponente mit einer die Winkelgeschwindigkeit repräsentierenden Amplitude umfaßt;
-   Mittel zum Erzeugen eines elektrischen Erfassungssignals (DET), das die mechanische Schwingung repräsentiert und ebenfalls eine parasitäre Komponente und wenigstens eine Nutzkomponente mit einer die Winkelgeschwindigkeit repräsentierenden Amplitude umfaßt;

    **dadurch gekennzeichnet, daß** sie analoge Verarbeitungsmittel (27) für die Erfassungssignale (DET) und Erregungssignale (OSC) umfaßt, die zwei gleiche analoge Multiplizierer (29, 31) mit demselben Temperaturverhalten und eine Schaltung (33) für eine Phasenverschiebung um exakt 90° umfassen, die miteinander verbunden sind, um wenigstens ein analoges Meßsignal ($U_1$, $U_2$) zu liefern, das von der Nutzkomponente des Erfassungssignals (DET) abhängt und von der Temperatur unabhängig ist und in bezug auf das Erregungssignal (OSC) und/oder das Erfassungssignal (DET) eine die Winkelgeschwindigkeit des Meßwandlers (1) repräsentierende Phasenverschiebung (Ψ) aufweist.

2. Vorrichtung nach Anspruch 1, **dadurch gekennzeichnet, daß** der Meßwandler (1) eine Quarz-Stimmgabel ist.

3. Vorrichtung nach Anspruch 1 oder 2, **dadurch gekennzeichnet, daß** die 90°-Phasenverschiebungsschaltung (33) anhand eines Eingangssignals ($V_1$) zwei Ausgangssignale ($V_1$, $V_1$') erzeugen kann, die unabhängig von der Betriebstemperatur der Phasenverschiebungsschaltung (33) um exakt 90° phasenverschoben sind.

4. Vorrichtung nach Anspruch 3, **dadurch gekennzeichnet, daß** die 90°-Phasenverschiebungsschaltung (33) an einem Eingang das Erregungssignal (OSC) des Meßwandlers empfängt und einen ersten Ausgang, der an einen Eingang eines der analogen Multiplizierer (31) angeschlossen ist, um an diesen eines ($V_1$) der Ausgangssignale zu liefern, sowie einen zweiten Ausgang, der an einen Eingang des anderen analogen Multiplizierers (29) angeschlossen ist, um an diesen das andere ($V_1$') der Ausgangssignale zu liefern, umfaßt, wobei die Multiplizierer (31, 29) außerdem mit dem Erfassungssignal (DET) versorgt werden, um jeweils ein analoges Meßsignal ($U_1$, $U_2$) zu erzeugen, das von der Nutzkomponente dieses Erfassungssignals abhängt und von der Temperatur unabhängig ist.

5. Vorrichtung nach Anspruch 4, **dadurch gekennzeichnet, daß** die 90°-Phasenverschiebungsschaltung (33) zwei parallelgeschaltete Frequenzteilerschaltungen (41, 43) umfaßt, die dasselbe Temperaturverhalten besitzen, wovon jedoch eine (41) auf eine Anstiegsflanke und die andere (43) auf eine Abstiegsflanke reagiert, wobei die beiden Teiler (41, 43) mit demselben Signal (C) versorgt werden, das von dem Erregungssignal (OSC) abgeleitet ist.

6. Vorrichtung nach Anspruch 5, **dadurch gekennzeichnet, daß** die 90°-Phasenverschiebungsschaltung (33) eine Kippschaltung (35) umfaßt, die mit dem Erregungssignal (OSC) gespeist wird und ein Rechtecksignal (A) liefert, wobei der Ausgang der Kippschaltung (35) mit dem Eingang eines Bandpaßfilters (37) verbunden ist, das die dritte Harmonische (B) des Rechtecksignals (A) durchlassen kann, wobei der Ausgang des Bandpaßfilters (37) mit dem Eingang eines Teilers (39) durch zwei verbunden ist, dessen Ausgang an die parallelgeschalteten, gleichen Teiler (41, 43) angeschlossen ist, so daß die gleichen Teiler am Ausgang Signale (D, E) liefern, die dieselbe Frequenz wie das Erregungssignal besitzen, jedoch zueinander um 90° phasenverschoben sind.

7. Vorrichtung nach Anspruch 6, **dadurch gekennzeichnet, daß** die Kippschaltung (35) so gewählt ist, daß sie am Ausgang ein Rechtecksignal (A) liefert, das ein Taktverhältnis in der Größenordnung von 10 bis 20 % besitzt.

8. Vorrichtung nach einem der vorhergehenden Ansprüche, **dadurch gekennzeichnet, daß** die Ausgänge ($U_1$, $U_2$) der analogen Verarbeitungsschaltung (27) mit dem Eingang eines Analog/Digital-Umsetzers (23), insbesondere eines 14-Bit-Analog/Digital-Umsetzers, verbunden sind, dessen Ausgang mit dem Dateneingang eines Mikroprozessors (25), in dem die digitalen Werte der Winkelgeschwindigkeit des Meßwandlers berechnet werden, verbunden sind.

9. Verfahren zum Messen der Winkelgeschwindigkeit eines Meßwandlers (1), der einer aufgrund seiner Winkelbewegung erzeugten Coriolis-Kraft unterliegt, das die Schritte umfaßt, die darin bestehen:

   - an den Meßwandler (1) ein elektrisches Erregungssignal (OSC) anzulegen, wobei der Meßwandler (1) in Reaktion darauf ein Erfassungssignal (DET) erzeugen kann, das eine die Winkelgeschwindigkeit des Meßwandlers (1) repräsentierende Nutzkomponente sowie eine parasitäre Komponente umfaßt; und
   - das Erfassungssignal zu erfassen;

   **dadurch gekennzeichnet, daß** es außerdem die Schritte umfaßt, die darin bestehen:

   - das Erfassungssignal (DET) einer analogen Verarbeitung zu unterwerfen, um wenigstens ein analoges Meßsignal ($U_1$, $U_2$) zu erhalten, das von der Nutzkomponente dieses Erfassungssignals abhängt und von der Temperatur unabhängig ist und in bezug auf dieses Erfassungssignal eine die Winkelgeschwindigkeit des Meßwandlers (1) repräsentierende Phasenverschiebung (Ψ) aufweist; und
   - an dem analogen Meßsignal ($U_1$, $U_2$) eine Analog/Digital-Transformation vorzunehmen, gefolgt von einer Berechnung, um den Wert der Rotationsgeschwindigkeit des Meßwandlers (1) zu erhalten.

### Claims

1. Angular speed measuring device comprising :

   - a transducer (1) intended to rotate at said angular speed;

- means (9) for generating a mechanical vibration of said transducer (1) in response to an excitation signal (OSC), this mechanical vibration comprising a parasite component and at least one useful component having an amplitude which is representative of said angular speed;

- means for producing an electric detection signal (DET) representative of said mechanical vibration and also comprising a parasite component and at least one useful component having an amplitude which is representative of said angular speed;

**characterized in that** it comprises analog processing means (27) of the detection signal (DET) and of the excitation signal (OSC) comprising two identical analog multipliers (29, 31) having a same temperature behaviour and a phase-shifting circuit (33) of exactly 90°, connected between them to provide at least one analog measurement signal ($U_1$, $U_2$) which depends on said useful component of the electric detection signal (DET) and independent of the temperature which presents with respect to said excitation signal (OSC) and/or detection signal (DET) a phase-shift ($\psi$) representative of the angular speed of said transducer (1).

2. Device according to claim 1, **characterized in that** said transducer (1) is a quartz tuning fork.

3. Device according to claim 1 or 2, **characterized in that** said 90° phase-shifting circuit (33) is capable of producing from an input signal ($V_1$), two output signals ($V_1$, $V_1'$) which are exactly in quadrature, independently of the operation temperature of said phase-shifting circuit (33).

4. Device according to claim 3, **characterized in that** said 90° phase-shifting circuit (33) has its input connected to the excitation signal (OSC) of the transducer and comprises a first output connected to an input of one of said analog multipliers (31) in order to provide it with one ($V_1$) of said output signals and a second output connected to an input of the other analog multiplier (29) in order to provide it with the other ($V_1'$) of said output signals, said multipliers (31, 29), being moreover fed by said detection signal (DET) for each producing an analog signal ($U_1$, $U_2$) depending on the useful component of this detection signal and independent of the temperature.

5. Device according to claim 4, **characterized in that** said 90° phase-shifting circuit (33) comprises two frequency dividing circuits (41, 43) connected in parallel and having a same temperature behaviour, but one of which (41) reacting to a leading edge and the other of which (43) reacting to a trailing edge, said two dividers (41, 43) being fed by a same signal C derived from the excitation signal (OSC).

6. Device according to claim 5, **characterized in that** said 90° phase-shifting circuit (33) comprises a monostable (35) fed by the excitation signal (OSC) and providing a rectangular signal (A), the output of said monostable (35) being connected to the input of a band-pass filter (37) which is capable of letting pass the third harmonic (B) of said rectangular signal (A), the output of said band-pass filter (37) being connected to the input of a division-by-two circuit (39), the output of which is connected to said identical dividers (41, 43) which are connected in parallel, so that said identical dividers provide signals (D, E) at their outputs which are of the same frequency as the excitation signal, and which are phase-quadratured one with respect to the other.

7. Device according to claim 6, **characterized in that** said monostable (35) is chosen so as to provide at its output a rectangular signal (A) having a time cycle which is around 10 to 20%.

8. Device according to any one of the preceding claims, **characterized in that** the outputs ($U_1$, $U_2$) of said analog processing circuit (27) are connected to the input of an analog-digital converter (23), in particular a 14 bit analog-digital converter, the output of which is connected to the data input of a microprocessor (25) in which the digital values of the angular speed of the transducer are calculated.

9. Method for measuring the angular speed of a transducer (1) undergoing a Coriolis force caused by its angular movement, comprising the following steps :

- applying an electric excitation signal (OSC) to the transducer (1), capable of generating a responding detection signal (DET) comprising a useful component representative of the angular speed of the transducer, and a parasite component,

- detecting said detection signal;

**characterized in that** it further comprises the following steps consisting in :

- subjecting said detection signal (DET) to an analog processing in order to obtain at least one measuring analog signal ($U_1$, $U_2$) depending on said useful component of this detection signal and independent of the temperature, which presents with respect to this detection signal a phase-shift ($\psi$) representative of the angular speed of the transducer (1); and

- performing on said measuring analog signal ($U_1$, $U_2$), an analog-digital transformation followed by a calculation in order to obtain, the value of said rotational speed of the transducer (1).

Fig. 1a

Fig. 1b

# Fig. 2

# Fig. 3

# Fig.4

# Fig.5